# EUROPEAN PATENT APPLICATION

(11) **EP 4 729 374 A1**
(43) Date of publication of application: **22.04.2026**
(21) Application number: 24207705.5
(22) Date of filing: 21.10.2024
(51) Int. Cl.: B60T 5/00, F16D 65/10, F16D 65/827

(54) **BRAKE DRUM WITH INTERNALLY ARRANGED COOLING CHANNELS**

(71) Applicant: Volvo Truck Corporation, 405 08 Göteborg (SE)
(72) Inventor: MANDAL, Goutam, 732121 MALDA (IN); SHANKAR, Naveen, 562114 BANGALORE (IN)
(74) Representative: Kransell & Wennborg KB

(57) **Abstract**

The present disclosure relates to a brake drum, comprising a brake drum wall extending in a circumferential direction and in an axial direction, the brake drum wall extending in the axial direction from a first axial end of a first axial end portion to a second axial end of a second axial end portion of the brake drum, the brake drum wall comprising an inner surface and an outer surface, wherein the brake drum wall has a wall thickness in a radial direction between the inner and outer surfaces, wherein the brake drum comprises a plurality of cooling channels arranged internally between the inner and outer surfaces, each one of the cooling channels extends in the axial and circumferential directions between an inlet at the first axial end portion and an outlet at the second axial end portion.

## Description

### TECHNICAL FIELD

The disclosure relates generally to brake drums. In particular aspects, the disclosure relates to a brake drum with internally arranged cooling channels. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles, such as e.g. vehicles in the form trucks, always have a high demand on the wheel brakes. These demands relate in particular to the braking capability of the wheel brake as they need to function properly to reduce vehicle speed properly.

For vehicles using a brake drum, there is however a risk that the temperature of such brake drum gets excessively high during braking. There is thus a need to further improve brake drums to reduce the risk that the brake drum is exposed to too high temperature levels.

### SUMMARY

According to a first aspect of the disclosure, there is provided a brake drum, comprising a brake drum wall extending in a circumferential direction and in an axial direction, the brake drum wall extending in the axial direction from a first axial end of a first axial end portion to a second axial end of a second axial end portion of the brake drum, the brake drum wall comprising an inner surface and an outer surface, wherein the brake drum wall has a wall thickness in a radial direction between the inner and outer surfaces, wherein the brake drum comprises a plurality of cooling channels arranged internally between the inner and outer surfaces, each one of the cooling channels extends in the axial and circumferential directions between an inlet at the first axial end portion and an outlet at the second axial end portion.

The first aspect of the disclosure may seek to mitigate the problem of excessive temperature levels in the brake drum material during braking. A technical benefit may include that improved cooling of the brake drum may be obtained. In further detail, an improved cooling distribution of the brake drum may be obtained. By providing a plurality of internally arranged cooling channels that extends in the axial and circumferential directions, centrifugal forces may cause the air to move from the inlet to the outlet during rotation of the brake drum. The cooling channels may hence act as a pump that forces the air to flow from the inlet to the outlet which will improve the cooling effect of the brake drum, i.e. reduce the temperature level of the brake drum. Improved cooling of the brake drum may in turn reduce the risk that the brake drum will be exposed to temperature generated damage. Put it differently, there may be a reduced risk of thermal crack propagation in the brake drum. As a result, the brake drum can be used for an extended period of time and the need for aftermarket service can be reduced.

The brake drum should be construed as a rotating component during operation of the vehicle it is connected to. The brake drum is thus expressed in a cylindrical coordinate system, where the circumferential direction corresponds to the direction of the rotation of the brake drum. The axial direction corresponds to the direction from the first axial end to the second axial end, while the radial direction corresponds to the direction from a geometric center to the outer circumference of the brake drum. Further, the first axial end portion should be construed as a portion of the brake drum at the first axial end. The first axial end portion may extend axially from the first axial end and in a direction towards the second axial end. The first axial end portion may have an axial extension of e.g. 10 -30% of a total axial extension of the brake drum. In a similar vein, the second axial end portion may extend axially from the second axial end and in a direction towards the first axial end. The second axial end portion may have an axial extension of e.g. 10 -30% of the total axial extension of the brake drum.

Optionally in some examples, including in at least one preferred example, the outlet is arranged in an axially facing surface at the second axial end portion of the brake drum. A technical benefit may include that the air can be exhausted from the brake drum in the axial direction whereby the air may not hit any portion of the brake drum. The air, when travelling inside the cooling channels, may be heated by the relatively high temperature of the brake drum, i.e. the air is exposed to heat transfer. The warmer air exhausted through the outlet may thus not hit any parts or portions of the brake drum but rather be exhausted to the ambient environment. Further, arranging the outlet at the axially facing surface may simplify the manufacturing process of the cooling channels. As an example, the cooling channels may be formed in the brake drum wall using e.g. pipes or channels as casting inserts during casting of the brake drum.

Optionally in some examples, including in at least one preferred example, the inlet is arranged in the outer surface of the brake drum wall. A technical benefit may include that air from outside the brake drum can be guided through the cooling channels. The air at the outside of the brake drum is often cooler than the air inside the brake drum, i.e. the volume inside of the inner surface. Hence, a further improved cooling characteristics of the brake drum may be obtained.

Optionally in some examples, including in at least one preferred example, each one of the cooling channels extends in a radial outward direction from the inner surface towards the outer surface. A technical benefit may include that the air may be exposed to a further increased centrifugal force during rotation of the brake drum. The pumping effect of the air can be increased, and the cooling characteristics can be improved.

Optionally in some examples, including in at least one preferred example, each one of the cooling channels extends in the axial and circumferential directions in a straight inclined shaped configuration. A technical benefit may include that the cooling channels may be formed in a simple manner.

Optionally in some examples, including in at least one preferred example, the cooling channels are mutually spaced apart from each other. A technical benefit may include that the cooling distribution of the brake drum may be improved.

Optionally in some examples, including in at least one preferred example, the cooling channels are closed cooling channels between the inlet and the outlet. A technical benefit may include that the air inside the cooling channels may provide a cooling effect on the material that houses the cooling channels. The inlet and the outlet should of course be construed as open ends. Hence, the definition "closed cooling channels" should not be construed in such a manner that the cooling channels are closed also at the inlet and the outlet.

Optionally in some examples, including in at least one preferred example, the cooling channels are integrally formed in the material forming the wall thickness in the radial direction. A technical benefit may include that the air inside the cooling channels may provide a cooling effect on the material that houses the cooling channels.

Optionally in some examples, including in at least one preferred example, the inner surface faces in the radial direction towards an inner volume of the brake drum, and the outer surface faces in a direction away from the inner volume of the brake drum.

Optionally in some examples, including in at least one preferred example, the inner surface is configured to interact with a friction brake element upon braking. Thus, during braking, the interaction between the friction brake element and the inner surface may generate an increased temperature in the brake drum due to friction.

Optionally in some examples, including in at least one preferred example, the brake drum further comprises a second set of cooling channels extending from a first opening at the inner surface to a second opening at the outer surface. A technical benefit may include that yet further cooling of the brake drum can be obtained.

Optionally in some examples, including in at least one preferred example, the first and second openings are arranged at the first axial end portion of the brake drum. A technical benefit may include that the first axial end portion may be exposed to an increased cooling.

Optionally in some examples, including in at least one preferred example, the brake drum further comprises a second wall, the second wall being arranged at the first axial end portion, the second wall extending from the first axial end portion in the radial direction. A technical benefit may include that the brake drum can be attached to e.g. the wheel at the second wall.

Optionally in some examples, including in at least one preferred example, the brake drum further comprises a plurality of indentations arranged at the second axial end portion of the of the brake drum. A technical benefit may include that the plurality of indentations may act as an impeller at the second axial end portion. The plurality of indentations may hence push the ambient air at the second portion towards the first portion. The air may be pushed along the inner surface and exit the brake drum through the second set of cooling channels. A continuous flow of air may hereby flow inside the brake drum which may increase the convective heat transfer and thus reduce the temperature level of the brake drum.

Optionally in some examples, including in at least one preferred example, each indentation extends from the second axial end in a direction towards the first axial end. A technical benefit may include that the air may be forced downwards towards the first axial end.

Optionally in some examples, including in at least one preferred example, the plurality of indentations is arranged on the inner surface of the brake drum wall. A technical benefit may include that the air may be forced to flow along the inner surface which is often exposed to a higher temperature level compared to the outer surface.

Optionally in some examples, including in at least one preferred example, the indentations extend axially and circumferentially towards the first axial end. A technical benefit may include that an improved impeller effect may be obtained.

According to a second aspect, there is provided a wheel brake arrangement comprising the brake drum according to any one of the examples described above in relation to the first aspect.

Optionally in some examples, including in at least one preferred example, the wheel brake arrangement comprises a friction brake element configured to engage with the inner surface of the brake drum wall.

Effects and features of the second aspect are largely analogous to those described above in relation to the first aspect.

According to a third aspect, there is provided a vehicle comprising the wheel brake arrangement according to any one of the examples described above in relation to the second aspect.

Effects and features of the third aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Figs. 2a - 2b are exemplary illustrations of a wheel brake arrangement according to an example,
Fig. 3 is an exemplary illustration of a brake drum according to an example, and
Fig. 4 is a cross-sectional view of the exemplified brake drum in Fig. 3 according to an example.

### DETAILED DESCRIPTION

The detailed description set forth below provides information and examples of the disclosed technology with sufficient detail to enable those skilled in the art to practice the disclosure.

The following disclosure aims at mitigating the problem of excessive temperature levels in a brake drum material during braking. A technical benefit may include that improved cooling of the brake drum may be obtained. In further detail, an improved cooling distribution of the brake drum may be obtained.

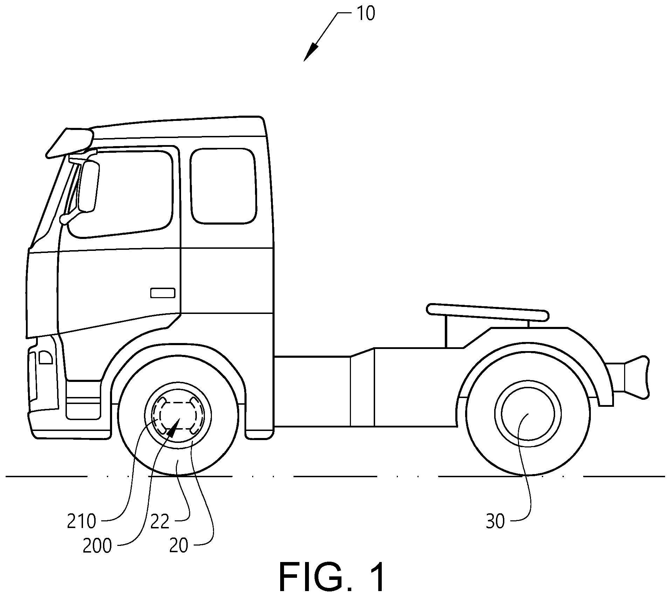

Reference is made to Fig. 1 which is an exemplary illustration of a vehicle 10 according to an example. The vehicle 10 comprises a non-illustrated traction motor, which may be an internal combustion engine or an electric traction motor, or a combination of internal combustion engine and electric traction motor. The vehicle 10 further comprises a wheel brake arrangement 200 which acts as a service brake for the vehicle. The wheel brake arrangement 200 is depicted as connected to the pair of front wheels 20 of the vehicle 10. However, it should be readily understood that the wheel brake arrangement 200 may alternatively, or additionally, be connected to any of the rear wheels 30 of the vehicle 10. The exemplified wheel brake arrangement 200 comprises a brake drum as will be evident from the below description.

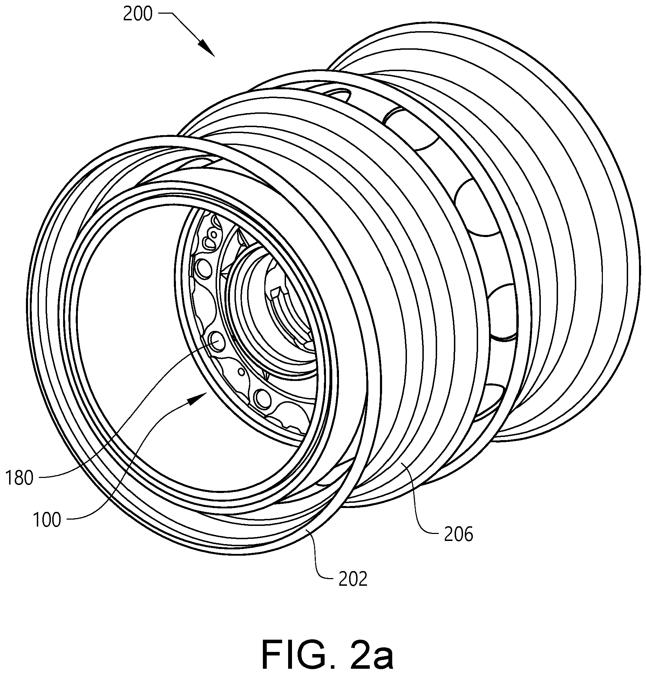

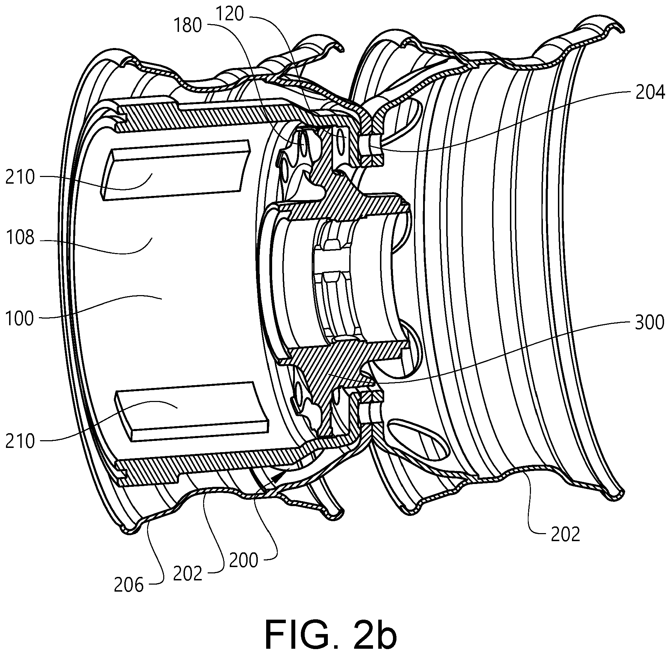

In order to describe the wheel brake arrangement 200 in further detail, reference is made to Figs. 2a - 2b, which are exemplary illustrations of the wheel brake arrangement 200 according to an example. As can be seen in Figs. 2a - 2b, the wheel brake arrangement 200 is connected to a wheel rim 202 of the wheel 20. In particular, the exemplified wheel brake arrangement 200 is attached to the wheel rim 202 by e.g. screws or bolts connected through holes 180 in a second wall 120 of a brake drum 100 of the wheel brake arrangement 200 and through corresponding holes 204 in the wheel rim 202. Also, the wheel brake arrangement 100 comprises a hub 300 mounted on a non-illustrated wheel axle arrangement. The hub 300 is also connected to the wheel rim 202 by the screw or bolts through the holes 180, 204. Further, a tire (22 in Fig. 1) is arranged on the outer circumference surface 206 of the wheel rim 202. The wheel brake arrangement 200 further comprises a friction brake element 210 which is schematically illustrated in Fig. 2b as well as in Fig. 1. The friction brake element 210 is exemplified as brake pad. Although not illustrated in the figures, the friction brake element 210 is controlled by e.g. a spring and an actuator such that the friction brake element 210 can be engaged to, and disengaged from, an inner surface 108 of the brake drum 100.

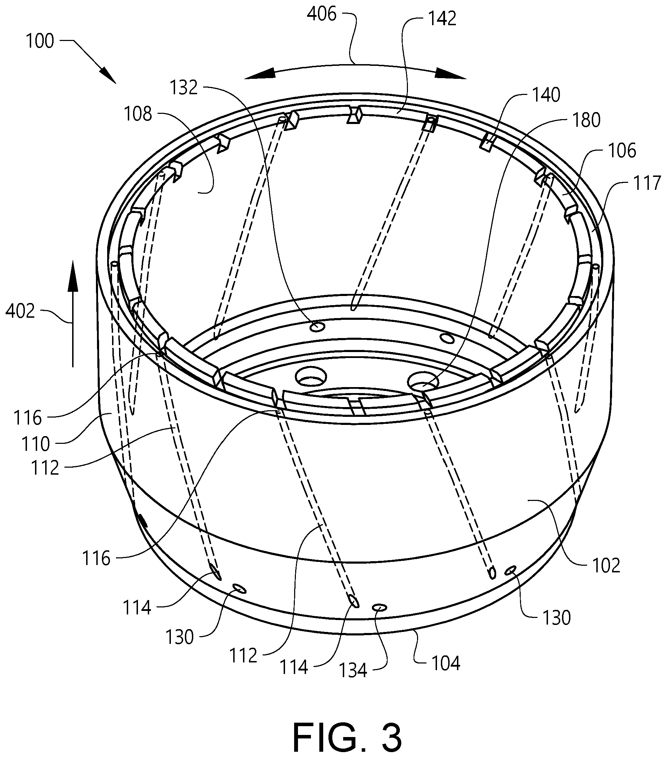

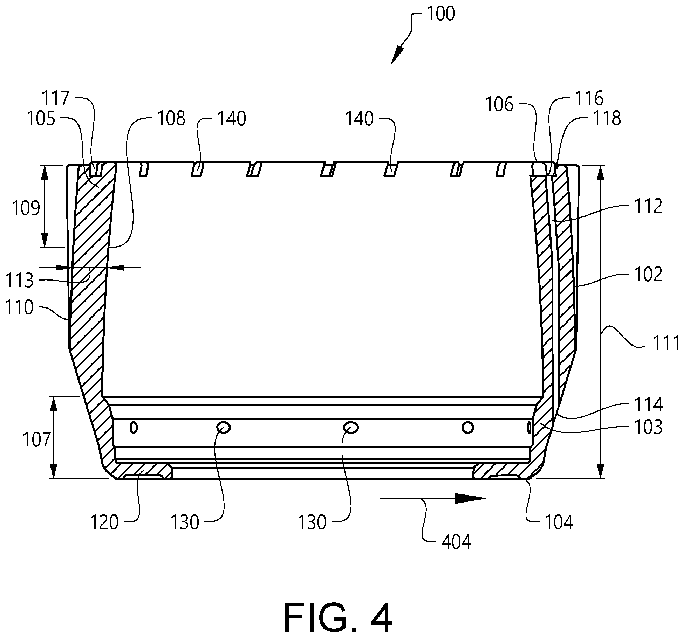

Reference is now made to Figs. 3 and 4 for the purpose of describing the brake drum 100 in further detail. Fig. 3 is an exemplary perspective view of the brake drum 100 according to an example, and Fig. 4 is a cross-sectional view of the exemplified brake drum 100 according to an example. The brake drum 100 is expressed in a cylindrical coordinate system, i.e. the brake drum 100 extends in an axial direction 402, a radial direction 404 and a circumferential direction 406. In further detail, the brake drum 100 comprises a brake drum wall 102 extending in the axial direction 402 from a first axial end 104 to a second axial end 106. The first axial end 104 is arranged at a first axial end portion 103 of the brake drum 100, while the second axial end 106 is arranged at second axial end portion 105 of the brake drum 100. The first axial end portion 103 may extend a first predetermined axial distance 107 from the first axial end 104 towards the second axial end 106. The first predetermined axial distance 107 may be e.g. 10 -30% of a total axial extension 111 of the brake drum 100. In a similar vein, the second axial end portion 105 may extend a second predetermined axial distance 109 from the second axial end 106 towards the first axial end 104, the second predetermined axial distance 109 may be e.g. 10 -30% of a total axial extension 111 of the brake drum 100.

Further, and as indicated above, the brake drum 100 comprises an inner surface 108. In further detail, the inner surface 108 forms part of the brake drum wall 102. The inner surface 108 is configured to interact with the friction brake element 210 upon braking. A frictional engagement of the inner surface 108 and the friction brake element 210 will thus be provided when the wheel brake arrangement is arranged in an engaged state, i.e. when applying the brake. The frictional engagement may cause the temperature level of the brake drum wall 102 to increase. The brake drum wall 102 also comprises an outer surface 110. The inner 108 and outer 110 surfaces facing substantially in opposite radial directions. In detail and in use, the outer surface 110 faces towards the above described wheel rim 202. Further, the inner 108 and outer 110 surfaces are arranged at a radial distance from each other. Hence the brake drum wall 102 has a wall thickness 113 in the radial direction 404 between the inner 108 and outer 110 surfaces. As is evident from Fig. 4, the wall thickness 113 may be a varying wall thickness along the axial extension of the brake drum wall 102. In further detail, and according to the exemplified brake drum 100 in Fig. 4, the wall thickness 113 may be smaller at the first axial end portion 103 compared to at the second axial end portion 105. Also, the brake drum wall 102 may be arranged in a tapered shape at the lower axial end portion 103. Thus, a diameter of the brake drum wall 102 may be smaller at the first axial end 104 compared to the diameter at a position arranged at the above described first predetermined axial distance 107. The brake drum wall 102 may however be arranged in a non-tapered shape at the second axial end portion 105, the brake drum wall 102 may be arranged in a cylindrical shape at the second axial end portion 105.

As indicated above, the brake drum 100 may be exposed to an increase in temperature when the friction brake element 210 engages with the inner surface 108 of the brake drum wall 102 during braking. The following will now describe various modifications of the brake drum 100 to reduce a temperature increase of the brake drum 102.

As can be seen in Figs. 3 and 4, the brake drum comprises a plurality of cooling channels 112. The cooling channels 112 are arranged in the material of the brake drum wall 102 and exemplified as mutually spaced apart from each other. The cooing channels 112 are thus arranged internally between the inner 108 and outer 110 surfaces of the brake drum wall 102. Put it differently, the cooling channels 112 may be integrated into the material forming the wall thickness 113 of the brake drum wall 102 in the radial direction 404 between the inner 108 and outer 110 surfaces. Further, each of the plurality of cooling channels 112 extends between a respective inlet 114 and a respective outlet 116. Hereby, air enters the cooling channels 112 at the inlet 114 and exits the cooling channels 112 through the outlet 116, or vice versa, i.e. enters the outlet 116 and exits the inlet 112. The inlet 114 and outlet 116 are thus open ends, while the cooling channels 112 may be closed cooling channels 112 between the inlet 114 and the outlet 116.

Furthermore, the inlet 114 is exemplified as arranged on the outer surface 110 of the brake drum wall 102. The inlet 114 is arranged at the first axial end portion 103 of the brake drum wall 102. In the exemplification depicted in Figs. 3 and 4, the inlet 114 is arranged at an axial distance from the first axial end 104. The axial distance from the first axial end is smaller than the above described first predetermined axial distance 107. Ambient air may thus enter the cooling channels 112 from outside the drum brake 100. The outlet 116 on the other hand may be arranged at the second axial end 106 or in the vicinity thereof. In the example depicted in Figs. 3 and 4, the drum brake 100 comprises a circumferentially extending groove 117 having an axially facing surface 118. The outlet 116 is arranged in the axially facing surface 118. Hence, the air is exhausted at the outlet 116 in the axial direction. It should however be understood that the drum brake may not have a circumferentially extending groove 117, and the outlet may in such case be arranged at the second axial end 106, i.e. at the outermost end of the brake drum 100.

The exemplified cooling channels 112 extends in the axial direction 402 as well as in the circumferential direction 406 from the inlet 114 to the outlet 116. According to the example depicted in Fig. 3, each cooling channel extends in the axial 402 and circumferential 406 directions in a straight inclined shaped configuration. It should however be understood that the cooling channels may be arranged in a curved shape between the inlet 114 and the outlet 116, or in a spiral shape, etc. Also, and can be seen in Fig. 4, the cooling channels may have a radial component, i.e. the cooling channels may additionally extend in the radial direction 404 between the inlet 114 and the outlet 116. In the example of Fig. 4, the cooling channels extend radially inwards from the inlet 114 to the outlet 116.

The brake drum 100 further comprises a second set of cooling channels 130. The second set of cooling channels 130 may be arranged at the first axial end portion 103 of the brake drum wall 102. The cooling channels of the second set of cooling channels 130 each extends from a first opening 132 to a second opening 134. The first opening 132 may be arranged at the inner surface 108, while the second opening 134 may be arranged at the outer surface 110. Each of the cooling channels of the second set of cooling channels 130 may extend in the radial direction from the inner surface 108 to the outer surface 110. Hence, the second set of cooling channels 130 may extend radially trough the thickness 113 of the material between the first 108 and second 110 surfaces. In addition, the second set of cooling channels 130 may also extend in the circumferential direction 406 between the first 108 and second 110 surfaces. Further, each of the cooling channels of the second set of cooling channels 130 may be circumferentially spaced apart from the inlet 114 of the above described cooling channels 112 that extends between the first 103 and second 105 axial end portions of the brake drum wall 102. In further detail, the second opening 134 may be arranged circumferentially between a pair of inlets 114 of the cooling channels 112. The second opening 134 may be arranged circumferentially closer to one of the inlets of the pair of inlets compared to the other inlet 112 of the pair of inlets.

Moreover, the exemplified brake drum 100 also comprises a plurality of indentations 140. The indentations 140 are arranged at the second axial end portion 105 of the brake drum wall 102. In particular, each of the indentations 140 extends axially from the second axial end 106 towards the first axial end 104. In the example depicted in Figs. 3 and 4, the indentations 140 also extends circumferentially, i.e. the indentations 140 are angled. Also, the indentations 140 are exemplified as arranged on the inner surface 108 of the brake drum wall 102. In the exemplification depicted in Fig. 3, the indentations 140 are arranged on a wall portion 142 arranged radially inside of the above described circumferentially extending groove 117. The plurality of indentations 140 may be mutually spaced apart from each other in the circumferential direction 406.

When the brake drum 100 rotates, the indentations 140 may force air to flow along the inner surface 108 from the second axial end 106 towards the first axial end 104. The air may subsequently enter the first opening 132 of the second set of cooling channels 130, and directed through the second set of cooling channels 130. The air is thereafter exhausted through the second opening 134 towards the wheel rim 202. While at the same time air may be directed through the cooling channels 112 from the inlet 114 to the outlet 116, whereby an improved temperature reduction of the brake drum 100 may be obtained.

### EXAMPLE LIST

Example 1. A brake drum, comprising a brake drum wall extending in a circumferential direction and in an axial direction, the brake drum wall extending in the axial direction from a first axial end of a first axial end portion to a second axial end of a second axial end portion of the brake drum, the brake drum wall comprising an inner surface and an outer surface, wherein the brake drum wall has a wall thickness in a radial direction between the inner and outer surfaces, wherein the brake drum comprises a plurality of cooling channels arranged internally between the inner and outer surfaces, each one of the cooling channels extends in the axial and circumferential directions between an inlet at the first axial end portion and an outlet at the second axial end portion.

Example 2. The brake drum of example 1, wherein the outlet is arranged in an axially facing surface at the second axial end portion of the brake drum.

Example 3. The brake drum of any one of examples 1 or 2, wherein the inlet is arranged in the outer surface of the brake drum wall.

Example 4. The brake drum of any one of the preceding examples, wherein each one of the cooling channels extends in a radial outward direction from the inner surface towards the outer surface.

Example 5. The brake drum of any one of the preceding examples, wherein each one of the cooling channels extends in the axial and circumferential directions in a straight inclined shaped configuration.

Example 6. The brake drum of any one of the preceding examples, wherein the cooling channels are mutually spaced apart from each other.

Example 7. The brake drum of any one of the preceding examples, wherein the cooling channels are closed cooling channels between the inlet and the outlet.

Example 8. The brake drum of any one of the preceding examples, wherein the cooling channels are integrally formed in the material forming the wall thickness in the radial direction.

Example 9. The brake drum of any one of the preceding examples, wherein the inner surface faces in the radial direction towards an inner volume of the brake drum, and the outer surface faces in a direction away from the inner volume of the brake drum.

Example 10. The brake drum of any one of the preceding examples, wherein the inner surface is configured to interact with a friction brake element upon braking.

Example 11. The brake drum of any one of the preceding examples, further comprising a second set of cooling channels extending from a first opening at the inner surface to a second opening at the outer surface.

Example 12. The brake drum of example 11, wherein the first and second openings are arranged at the first axial end portion of the brake drum.

Example 13. The brake drum of any one of the preceding examples, wherein the brake drum further comprises a second wall, the second wall being arranged at the first axial end portion, the second wall extending from the first axial end portion in the radial direction.

Example 14. The brake drum of any one of the preceding examples, wherein the brake drum further comprises a plurality of indentations arranged at the second axial end portion of the of the brake drum.

Example 15. The brake drum of example 14, wherein each indentation extends from the second axial end in a direction towards the first axial end.

Example 16. The brake drum of any one of examples 14 or 15, wherein the plurality of indentations is arranged on the inner surface of the brake drum wall.

Example 17. The brake drum of any one of examples 14 - 16, wherein the indentations extend axially and circumferentially towards the first axial end.

Example 18. A wheel brake arrangement comprising the brake drum according to any one of the preceding examples.

Example 19. The wheel brake arrangement of example 18, wherein the wheel brake arrangement comprises a friction brake element configured to engage with the inner surface of the brake drum wall.

Example 20. A vehicle comprising the wheel brake arrangement according to any of examples 18 - 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A brake drum (100), comprising a brake drum wall (102) extending in a circumferential direction (406) and in an axial direction (402), the brake drum wall extending in the axial direction from a first axial end (104) of a first axial end portion to a second axial end (106) of a second axial end portion of the brake drum, the brake drum wall comprising an inner surface (108) and an outer surface (110), wherein the brake drum wall has a wall thickness (113) in a radial direction (404) between the inner and outer surfaces,
wherein the brake drum comprises a plurality of cooling channels (112) arranged internally between the inner and outer surfaces, each one of the cooling channels extends in the axial and circumferential directions between an inlet (114) at the first axial end portion and an outlet (116) at the second axial end portion.

2. The brake drum of claim 1, wherein the outlet is arranged in an axially facing surface at the second axial end portion of the brake drum.

3. The brake drum of any one of claims 1 or 2, wherein the inlet is arranged in the outer surface of the brake drum wall.

4. The brake drum of any one of the preceding claims, wherein each one of the cooling channels extends in a radial outward direction from the inner surface towards the outer surface.

5. The brake drum of any one of the preceding claims, wherein each one of the cooling channels extends in the axial and circumferential directions in a straight inclined shaped configuration.

6. The brake drum of any one of the preceding claims, wherein the cooling channels are mutually spaced apart from each other.

7. The brake drum of any one of the preceding claims, wherein the cooling channels are closed cooling channels between the inlet and the outlet.

8. The brake drum of any one of the preceding claims, wherein the cooling channels are integrally formed in the material forming the wall thickness in the radial direction.

9. The brake drum of any one of the preceding claims, further comprising a second set of cooling channels extending from a first opening at the inner surface to a second opening at the outer surface.

10. The brake drum of claim 9, wherein the first and second openings are arranged at the first axial end portion of the brake drum.

11. The brake drum of any one of the preceding claims, wherein the brake drum further comprises a plurality of indentations arranged at the second axial end portion of the of the brake drum.

12. The brake drum of claim 11, wherein each indentation extends from the second axial end in a direction towards the first axial end.

13. The brake drum of any one of claims 11 - 12, wherein the indentations extend axially and circumferentially towards the first axial end.

14. A wheel brake arrangement comprising the brake drum according to any one of the preceding claims.

15. A vehicle comprising the wheel brake arrangement according to claim 14.
